# EUROPÄISCHE PATENTSCHRIFT

(11) **EP 3 611 417 B1**
(45) Veröffentlichungstag und Bekanntmachung des Hinweises auf die Patenterteilung: **09.03.2022**
(21) Anmeldenummer: 18188794.4
(22) Anmeldetag: 13.08.2018
(51) Int. Cl.: F16L 13/14, B21D 17/02, B21D 39/04

(54) **SYSTEM ZUM VERBINDEN EINES ROHRANSCHLUSSSTÜCKES MIT EINEM ROHR**
SYSTEM FOR CONNECTING A PIPE CONNECTING PIECE WITH A PIPE
SYSTÈME DE RACCORDEMENT D'UN ÉLÉMENT DE RACCORDEMENT DE TUBE À UN TUBE

(43) Veröffentlichungstag der Anmeldung: 19.02.2020
(73) Patentinhaber: Kaisair UG, 78187 Geisingen (DE)
(72) Erfinder: Kaiser, Christof, 78189 Geisingen (DE)
(74) Vertreter: Patentanwälte und Rechtsanwalt Weiß, Arat & Partner mbB

(56) Entgegenhaltungen:
- US-A1- 2007 283 741
- US-A1- 2016 138 738
- US-B2- 7 516 990

## Beschreibung

Die vorliegende Erfindung betrifft ein System zum Verbinden eines Rohranschlussstückes mit einem Rohr zum Leiten eines unter Druck stehenden Mediums, insbesondere eines gasförmigen oder flüssigen Mediums gemäß Anspruch 1.

Systeme zum Verbinden eines Rohranschlussstückes mit einem Rohr sind aus dem Stand der Technik in einer Vielzahl von unterschiedlichen Ausgestaltungen vorbekannt und werden dazu verwendet, ein Rohr mit einem Rohranschlussstück zum Leiten eines unter Druck stehenden Mediums, insbesondere eines gasförmigen oder flüssigen Mediums, zu verbinden. Derartige Verbindungen werden in dem Stand der Technik typischerweise mit Pressfittingen bewerkstelligt. Zum Verbinden des Rohranschlussstückes mit dem Rohr wird eine Presse benötigt, die eine angeformte Muffe oder einen Nippel des Rohranschlussstückes mit einem in einer Nut sitzenden O-Ring und dem Rohr mittels einer manuellen oder elektrischen Presse verpresst.

US 7 516 990 B2, US 2016 138 738 A1 und US 2007 283 741 A1 zeigen solche Systeme zum Verbinden eines Rohranschlussstückes mit einem Rohr.

Bei den aus dem Stand der Technik bekannten Systemen hat es sich als nachteilig erwiesen, dass einerseits eine solche Presse ein kostspieliges Spezialwerkzeug ist, die oftmals auf Baustellen bei der Montage von komplexen Leitungssystemen nur in begrenztem Umfang vorrätig ist, wodurch der Arbeitsfortschritt bei dem Aufbau des Leitungssystems verlangsamt wird.

Es ist daher die Aufgabe der vorliegenden Erfindung, ein verbessertes System zum Verbinden eines Rohranschlussstückes mit einem Rohr vorzuschlagen, welches einfach in der Anwendung ist, kostengünstig in der Herstellung ist und die Verwendung von spezialisierten elektronischen Werkzeugen überflüssig macht. Das System soll sowohl mit einem manuellen als auch maschinell angetriebenen Betätigungswerkzeug betätigbar sein, insbesondere durch ein standardisiertes Betätigungswerkzeug. Darüber hinaus soll die durch das System bewerkstelligte Verbindung zwischen dem Rohranschlussstück und dem Rohr eine formschlüssige Kopplung zwischen dem Rohranschlussstück und dem Rohr bewerkstelligen, welche einerseits ein ungewolltes Trennen der beiden Teile verhindert und andererseits eine ausreichende Dichtwirkung erzeugt, um den Anforderungen an eine gas- und flüssigkeitsdichte Verbindung für Drücke von bis zu 15 bar und mehr gerecht zu werden.

Die Lösung dieser Aufgaben erfolgt durch ein System zum Verbinden eines Rohranschlussstückes mit einem Rohr mit den Merkmalen des Patentanspruchs 1.

Die Unteransprüche haben weitere vorteilhafte Ausgestaltungen der Erfindung zum Inhalt.

Das erfindungsgemäße System zum Verbinden eines Rohranschlussstückes mit einem Rohr zum Leiten eines unter Druck stehenden Mediums, insbesondere eines gasförmigen oder flüssigen Mediums, umfasst das Rohranschlussstück, das Rohr und ein Werkzeug, wobei das Rohranschlussstück wenigstens einen Verbindungsbereich und wenigstens ein freies Ende umfasst, wobei der Verbindungsbereich in der Längsachse wenigstens einen Axialanschlag und wenigstens eine in einer Längsachse verlaufende Ausnehmung umfasst. Die Ausnehmung ist dabei bevorzugt zwischen dem Axialanschlag und dem wenigstens einen freien Ende angeordnet, wobei das Rohr von dem freien Ende auf den Verbindungsbereich des Rohranschlussstückes über die Ausnehmung geschoben werden kann, so dass das Rohr die Ausnehmung wenigstens bereichsweise, bevorzugt vollständig überdeckt. Weiterhin kann das Werkzeug an dem wenigstens einen Axialanschlag an dem Rohranschlussstück anliegen und das Rohr und das Rohrstück wenigstens bereichsweise umgreifen, wobei das Werkzeug weiterhin wenigstens einen Zahn umfasst, der in der Längsachse korrespondierend zu der Ausnehmung auf der dem Rohr zugewandten Seite angeordnet ist und wobei der wenigstens eine Zahn bei der Betätigung des Werkzeugs wenigstens eine Verformung am Rohr erzeugt, die in die wenigstens eine Ausnehmung greift. Demnach kann das Werkzeug nach dem Aufschieben des Rohrs auf den Verbindungsbereich des Rohranschlussstückes im Bereich des Axialanschlags derart aufgesetzt werden, dass der Axialanschlag die Position des Werkzeugs in der Längsachse vorgibt. Durch eine Betätigung des Werkzeugs wird durch den wenigstens einen Zahn das Rohr derart verformt, dass die Verformung eine formschlüssige Verbindung zwischen dem Rohr und dem Rohranschlussstück herstellt, durch die Rohr und das Rohranschlussstück in der gas- und flüssigkeitsdichten Verbindung gehalten sind. Durch die korrespondierende Anordnung der Ausnehmung und des wenigstens einen Zahn, sowie dessen Form, wird das Rohr in Axialrichtung in die Ausnehmung geschert, währenddessen das Rohr in Umfangsrichtung in die Ausnehmung gebogen wird. Die hergestellte formschlüssige Verbindung verhindert ein ungewolltes Abrutschen des Rohrs von dem Verbindungsbereich und weist einen Sicherheitsfaktor von mindestens 4 auf.

Gemäß einer weiteren vorteilhaften Ausgestaltung der vorliegenden Erfindung ist vorgesehen, dass das Rohranschlussstück einen Außenring umfasst, an den das Rohr beim Aufschieben anschlägt. Beim Aufschieben des Rohrs von dem freien Ende auf das Verbindungsstück gibt der Außenring die Endposition des Rohrs vor, in welcher das Rohr anschließend mittels des Werkzeugs festgelegt wird. Insbesondere ist es bevorzugt, wenn der Außenring von dem freien Ende des Rohranschlussstückes bzw. des Verbindungsstückes auf der von dem freien Ende abgewandten Seite zu der wenigstens einen Ausnehmung angeordnet ist, damit das Rohr beim Anschlag an den Außenring die Ausnehmung vollständig überdeckt. Der Außenring steht von der äußeren Mantelfläche des Rohranschlussstückes ab, wobei weiter bevorzugt der Außenring nicht weiter als die einfache Wandstärke t des Rohrs von der äußeren Mantelfläche absteht. Insbesondere bevorzugt steht der Außenring um die Hälfte der Wandstärke t des Rohrs von der äußeren Mantelfläche des Rohranschlussstückes ab.

Vorteilhaft ist es, wenn die wenigstens eine Ausnehmung eine Radialnut umfasst. Radialnuten können beispielsweise als Einstich ausgebildet sein. Die Radialnut kann aus einem oder mehreren Nutabschnitten über den Umfang in die äußere Mantelfläche des Verbindungsbereichs des Rohranschlussstückes eingebracht bzw. eingearbeitet werden, jedoch ist es besonders bevorzugt, wenn die Radialnut sich ringförmig über den gesamten Umfang erstreckt, wodurch eine Ausrichtung des Werkzeugs zum Einbringen der wenigstens einen Verformung vor der Betätigung nicht erforderlich ist und die Handhabung des Werkzeugs vereinfacht ist.

Weiterhin ist es vorteilhaft, wenn der wenigstens eine Axialanschlag einen Außenflansch umfasst, insbesondere einen Außenflansch, der radial von der Längsachse absteht. Der Außenflansch kann beispielsweise durch das Werkzeug umgriffen werden, wodurch die Position des Werkzeugs zur Herstellung der Verbindung zwischen dem Rohranschlussstück und dem Rohr in der Längsachse festgelegt ist. Weiter bevorzugt kann der Außenflansch mit ein oder mehreren Kanten, insbesondere als Sechskant, ausgebildet sein, wodurch die Lage des Werkzeugs um die Längsachse vorgegeben werden kann. Dadurch ist sichergestellt, dass die Ausnehmung sowie der Zahn in einer zueinander korrespondierenden Position in der Längsachse, also in einer gemeinsamen Ebene senkrecht zu der Längsachse angeordnet sind.

Eine weitere bevorzugte Ausgestaltung der vorliegenden Erfindung sieht vor, dass der wenigstens ein Axialanschlag eine Ringnut umfasst und dass das Werkzeug einen Innenflansch umfasst. Der Innenflansch ist bevorzugt eingerichtet, in die Ringnut einzugreifen, wodurch die axiale Position des Werkzeugs in der Längsachse an dem Rohranschlussstück festgelegt ist. Die Form des Innenflansches und die Form der Ringnut korrespondieren zueinander, wodurch der Innenflansch mit einem möglichst geringen Spiel in die Ringnut eingreifen kann und eine exakte Positionierung des Werkzeugs an dem Rohrstück erfolgen kann.

Auch ist es vorteilhaft, wenn zwischen dem freien Ende des Rohranschlussstückes und der Ausnehmung wenigstens eine Dichtung angeordnet ist. Besonders bevorzugt wird die wenigstens eine Dichtung aus einem Dichtring gebildet, der in einer umlaufenden Dichtungsnut angeordnet ist. Der Dichtring verschließt einen möglichen Spalt zwischen dem Rohranschlussstück und dem aufgeschobenen Rohr. Besonders bevorzugt ist eine Vielzahl von Dichtungen angeordnet, die nach Art einer Krokodil- oder Labyrinthdichtung eine besonders hohe Dichtwirkung aufweisen.

Es hat sich als vorteilhaft erwiesen, wenn das Werkzeug aus einem ersten Ringsegment und einem zweiten Ringsegment gebildet ist, und wenn das erste Ringsegment und das zweite Ringsegment durch ein Gelenk miteinander verschwenkbar verbunden sind. Das erste Ringsegment und das zweite Ringsegment sind weiter bevorzugt symmetrisch ausgebildet und können zur Betätigung des Werkzeugs zueinander um eine Gelenksachse des Gelenks aus einer geöffneten Stellung in die geschlossene Stellung und vice versa verschwenkt werden. Besonders bevorzugt ist weiterhin dabei, wenn das Gelenk jeweils an einem ersten Ende an dem jeweiligen Ringsegment angeordnet ist und ein zur Betätigung vorgesehenes Betätigungsmittel an einem zweiten Ende des jeweiligen Ringsegments angeordnet ist. Um eine größtmögliche Hebelwirkung bei der Betätigung des Werkzeugs bzw. des Betätigungsmittels zu erreichen, ist es weiterhin vorteilhaft, wenn das Gelenk und das Betätigungsmittel diametral zueinander angeordnet sind, wodurch eine größtmögliche Hebelwirkung realisiert ist.

Gemäß einer weiteren vorteilhaften Ausgestaltung der vorliegenden Erfindung ist der wenigstens eine Zahn mindestens um 30° um die Längsachse zu dem Gelenk versetzt auf einer inneren Mantelfläche des Werkzeugs angeordnet. Weiter bevorzugt ist der mindestens eine Zahn um 45° zu der Längsachse versetzt angeordnet und ganz besonders bevorzugt um einen Winkel von ca. 90°, da eine derartige Anordnung beim Verschwenken des ersten Ringsegments und des zweiten Ringsegments eine besonders große Radialkraftkomponente zum plastischen Verformen des Rohrs aufbringt.

Nach Maßgabe einer weiteren vorteilhaften Ausgestaltung der vorliegenden Erfindung, können die Ringsegmente mehrere Teilringsegmente umfassen, die mittels Verbindungsgelenke kettenartig miteinander verbunden sind. Vorzugsweise umfasst jedes Ringsegment zwei, drei, vier oder weitere Teilringsegmente, die in einer beliebigen Winkelteilung um die Längsachse und zu dem Gelenk angeordnet sind. Bei mindestens zwei Teilringsegmenten je Ringsegment können die Verbindungsgelenke Maßgabe einer besonders bevorzugten Ausgestaltung in einer Winkelteilung zwischen 20° und 30° um die Längsachse versetzt zu dem Gelenk angeordnet sein. Das jeweilige Teilringsegment kann mindestens einen Zahn aufweisen. Eine symmetrische Ausgestaltung des ersten Ringsegments und des zweiten Ringsegments kann vorteilhaft sein, ist jedoch zwingender Weise nicht notwendig. Mehrere Teilringsegmente haben sich erfindungsgemäß insbesondere bei größeren Rohrdurchmessern als vorteilhaft erwiesen.

Darüber hinaus ist es vorteilhaft, wenn das Werkzeug wenigstens zwei Zähne umfasst, die bevorzugt umfangssymmetrisch zu der Längsachse angeordnet sind. Insbesondere kann es vorteilhaft sein, wenn das Werkzeug mehr als zwei Zähne aufweist, weiter bevorzugt ist es, wenn das erste Ringsegment und/oder das zweite Ringsegment jeweils mindestens einen Zahn aufweisen, wodurch das Rohr über den Umfang an mehreren Umfangspositionen durch den jeweiligen Zahn bei der Betätigung des Werkzeugs plastisch verformt wird.

Besonders vorteilhaft ist es, wenn der Abstand zwischen dem wenigstens einen Axialanschlag und der wenigstens eine Ausnehmung und dem korrespondierenden Axialanschlag des Werkzeugs und des wenigstens einen Zahns identisch ist. Der Abstand bezieht sich dabei auf den Flächenmittelpunkt der Ausnehmung bzw. der Radialnut und/oder des Zahns gemessen von dem Axialanschlag bzw. dem korrespondierenden Axialanschlag des Werkzeugs.

Vorteilhaft ist es weiterhin, wenn eine Breite des Zahns in der Längsachse kleiner ist als eine Breite der Ausnehmung. Je geringer die Differenz zwischen der Breite der Ausnehmung und der Breite des Zahns ist, desto höher ist die Scherung in der Längsachse der Verformung und umso formgetreu greift die Verformung in die Ausnehmung. Das formgetreue Eingreifen kann sich vorteilhaft auf die Sicherheit gegen ein Abrutschen des Rohrs von dem Rohranschlussstück auswirken; dadurch wird ein möglichst großflächiger Formschluss zwischen der Ausnehmung und der Verformung in einer Ebene senkrecht zu der Längsachse gebildet. Insbesondere kann es vorteilhaft sein, wenn die Breite der Ausnehmung in der Längsachse mindestens die Breite des Zahns in der Längsachse und der zweifachen Wandstärke des Rohrs beträgt, so dass eine möglichst scherungsfreie plastische Verformung des Rohrs im Bereich der Ausnehmung durch die Zähne bewerkstelligt werden kann. Auch kann es vorteilhaft sein, wenn der wenigstens eine Zahn in der Längsachse einen im Wesentlichen rechteckigen Querschnitt ausweist, wobei weiter bevorzugt die Kanten des Zahnes in der Längsachse scharfkantig sind, wodurch bei Herstellen der Verformung die Verformung in der Längsachse aus einer ausgeprägten Scherung des Rohrs gebildet wird.

Eine vorteilhafte Ausgestaltung der vorliegenden Erfindung sieht vor, dass der wenigstens eine Zahn um die Längsachse symmetrisch ausgebildet ist und einen ersten Übergangsradius, der eine Zahnflanke mit der inneren Mantelfläche des Werkzeugs verbindet und einen zweiten Übergangsradius, der die Zahnflanke mit der Zahnmantelfläche verbindet, umfasst. Die Zahnmantelfläche entspricht dabei bevorzugt einer radial zu der inneren Mantelfläche beabstandet ausgebildeten Fläche, wobei weiter bevorzugt der erste Übergangsradius an der inneren Mantelfläche größer ist, als der zweite Übergangsradius an der Zahnmantelfläche. Insbesondere ist weiterhin bevorzugt, wenn der erste Übergangsradius mindestens doppelt so groß ist wie der zweite Übergangsradius, wodurch einerseits auf einer Außenseite des Rohrs sanfte Übergänge zwischen der durch den wenigstens einen Zahn des Werkzeugs herbeigeführten Verformung gewährleistet sind und andererseits eine Verformung erzeugt ist, die eine ausreichend belastbare formschlüssige Verbindung zwischen dem Rohr und dem Rohranschlussstück erzeugt.

Eine weitere vorteilhafte Ausgestaltung der vorliegenden Erfindung sieht vor, dass zur Betätigung des Werkzeugs ein Betätigungsmittel vorgesehen ist. Weiterhin ist es vorteilhaft, wenn das Betätigungsmittel ein Schraubenbolzen ist. Insbesondere ist dabei bevorzugt, wenn der Schraubenbolzen mit einem genormten bzw. standardisierten Schraubenkopf versehen ist, so dass das Werkzeug durch ein handelsübliches handbetätigbares Betätigungswerkzeug bedienbar ist oder durch ein herkömmliches maschinell betriebenes Betätigungswerkzeug, beispielsweise ein elektrisch betriebener Schrauber. Weiterhin ist es insbesondere bevorzugt, wenn der Schraubenkopf ein Mitnahmeprofil zum Herstellen einer formschlüssigen Verbindung mit dem Betätigungswerkzeug aufweist, insbesondere einen Innensechskant bzw. Inbus^{®}, oder Torx^{®}.

Weiterhin ist es besonders bevorzugt, wenn der Schraubenbolzen schwenkbar an dem Werkzeug gehalten ist, wodurch komplexe Spannungszustände beim Betätigen des Werkzeugs bzw. des Betätigungsmittels reduziert werden. Insbesondere ist bevorzugt, wenn das erste Ringsegment und das zweite Ringsegment jeweils an ihren freien Enden eine Lasche aufweisen. An einer ersten Lasche ist der Schraubenbolzen mit einer an der Lasche in einer Schwenkachse schwenkbar abgestützten Mutter gekoppelt, und an einer zweiten Lasche wird der Schraubenbolzen bzw. der Schraubenkopf des Schraubenbolzens gabelförmig durch die Lasche umgriffen. Das Gewinde des Schraubenbolzens und das Gewinde der Mutter sind aufeinander abgestimmt, so dass das Gewinde des Schraubenbolzens in das Gewinde der Mutter eingreift.

Eine bevorzugte Weiterbildung der Erfindung sieht vor, dass das Werkzeug eine Wechselaufnahme umfasst und dass in die Wechselaufnahme bevorzugt formschlüssig der wenigstens eine Zahn einsetzbar ist. Die Wechselaufnahme kann beispielsweise als Ausnehmung in die innere Mantelfläche des Werkzeugs eingearbeitet oder eingeformt sein, wodurch die jeweiligen Enden ein Verrutschen des mindestens einen Zahns in der Wechselaufnahme verhindern.

Weiterhin ist es vorteilhaft, wenn die Wechselaufnahme wenigstens ein Befestigungsmittel umfasst, durch welches der wenigstens eine Zahn in der Wechselaufnahme gehalten ist. Das Befestigungsmittel in der Wechselaufnahme kann beispielsweise durch eine Klemmung bewerkstelligt werden, durch eine magnetische Haltekraft oder durch eine Verschraubung.

Nachfolgend wird unter Bezugnahme auf die begleitenden Zeichnungen ein erfindungsgemäßes Ausführungsbeispiel des Systems zum Verbinden eines Rohranschlussstückes mit einem Rohr zum Leiten eines unter Druck stehenden Mediums im Detail erläutert, wobei in den einzelnen Figuren ebenfalls das Rohranschlussstück und das Werkzeug dargestellt sind. Im Einzelnen zeigen:
- Figur 1: eine perspektivische Explosionsdarstellung des erfindungsgemäßen Systems umfassend ein Rohranschlussstück, ein Rohr und ein Werkzeug zum Herstellen einer Verbindung zwischen dem Rohranschlussstück und dem Rohr,
- Figur 2 bis 6: eine schrittweise und perspektivische Darstellung der Erzeugung einer Verbindung zwischen dem Rohranschlussstück mit einem Rohr unter Verwendung des Werkzeugs,
- Figur 7a: eine perspektivische Darstellung des mit dem Rohr verbundenen Rohranschlussstückes,
- Figur 7b: eine vergrößerte Detaildarstellung gemäß Figur 7A, Detail X,
- Figur 8a: eine Seitenansicht der Verbindung zwischen dem Rohranschlussstück und dem Rohr,
- Figur 8b: eine Schnittdarstellung gemäß der Schnittlinie B gemäß Figur 8a,
- Figur 9a: eine Schnittdarstellung entlang der Schnittlinie A-A gemäß Figur 8a,
- Figur 9b: eine vergrößerte Darstellung des Details Y gemäß Figur 9a,
- Figur 10a: eine Schnittdarstellung des Werkzeugs entlang der Längsachse in einer geschlossenen Stellung, und
- Figur 10b: eine Schnittdarstellung des Werkzeugs senkrecht zu der Längsachse in der geschlossenen Stellung.

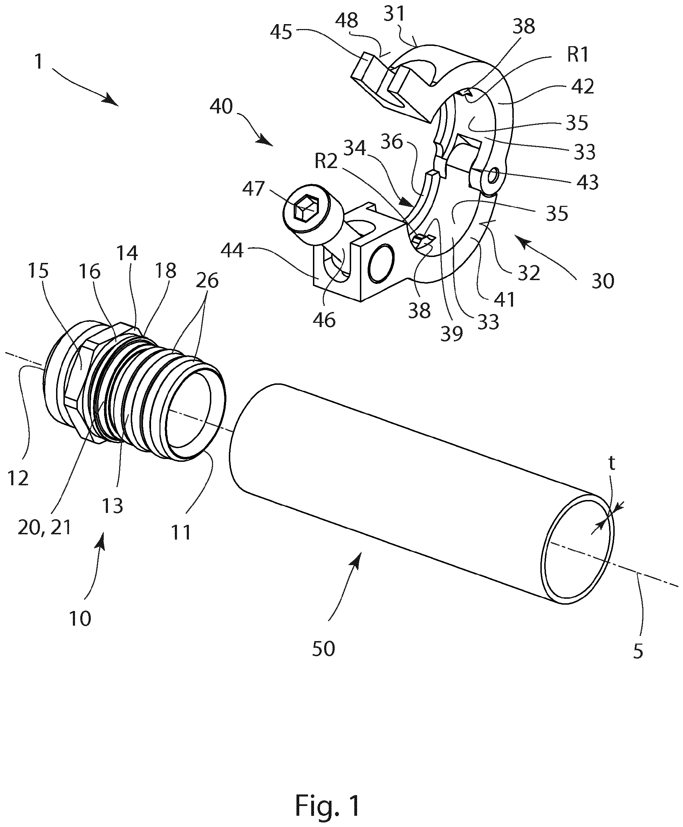

Figur 1 zeigt das erfindungsgemäße System 1 zum Verbinden eines Rohranschlussstückes 10 mit einem Rohr 50, wobei das System 1 das Rohranschlussstück 10, das Rohr 50 und ein Werkzeug 30 umfasst.

Das Rohranschlussstück 10 ist in dem gezeigten Ausführungsbeispiel ein Fitting, das aus einem metallischen Stoff, einem Kunststoff oder einem metallisierten Kunststoff hergestellt sein kann. Das Rohranschlussstück 10 umfasst weiterhin endseitig mindestens einen Verbindungsbereich 13 und erstreckt sich entlang einer Längsachse 5. Weiterhin umfasst das Rohranschlussstück 10 ein erstes freies Ende 11 und ein zweites freies Ende 12, wobei zwischen dem ersten freien Ende 11 und dem zweiten freien Ende 12 nach Art einer Durchgangsbohrung ein Leitungsbereich vorgesehen ist, durch den ein zu leitendes und unter Druck stehendes Medium, beispielsweise ein Gas oder eine Flüssigkeit, geleitet werden kann.

Darüber hinaus umfasst das Rohranschlussstück 10 eine äußere Mantelfläche mit einem Außendurchmesser D1, durch die auf dem ersten freien Ende 11 der Verbindungsbereich 13 ausgebildet ist. Der Verbindungsbereich 13 ist dazu ausgebildet, eine gas- und flüssigkeitsdichte Verbindung mit dem Rohr 50 herstellen, wodurch das unter Druck stehende Medium leckagefrei geleitet werden kann.

Der Verbindungsbereich 13 umfasst ein Außenflansch 15, eine Ringnut 16, eine Ausnehmung 20 sowie zwei parallel und beabstandet zueinander angeordnete Dichtungsnuten 26, die entlang der Längsachse 5 angeordnet sind. Die Ausnehmung 20 kann bevorzugt als Radialnut 21 ausgebildet sein. Die Anzahl der Ausnehmungen 20 sowie der Dichtungsnuten 26 kann beliebig gewählt sein, wobei auch eine Vielzahl von Radialnuten 21 entlang der Längsachse ausgebildet sein kann.

Der Außenflansch 15 ist im dargestellten Ausführungsbeispiel als Außensechskant ausgebildet und beabstandet zu dem ersten freien Ende 11 und dem zweiten freien Ende 12 angeordnet. Der Außenflansch 15 bildet zusammen mit der Ringnut 16 einen Axialanschlag 14.

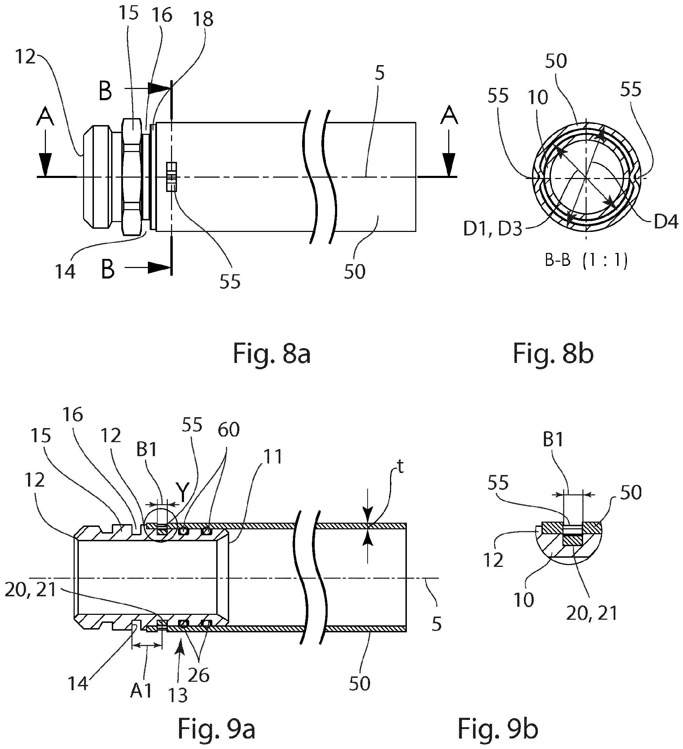

Die Ausnehmung 20 ist zwischen dem ersten freien Ende 11 und dem Axialanschlag 14 bzw. zwischen dem ersten freien Ende 11 und der Ringnut 16 angeordnet und ist bevorzugt über den Umfang in der Längsachse 5 des Rohranschlussstückes 10 als Radialnut 21 mit einer konstanten Nutbreite B1 - Figuren 9a und 9b - und einer konstanten Nuttiefe T1 in die äußere Mantelfläche eingearbeitet oder eingeformt. Die Ausnehmung 20 ist in einem vordefinierten Abstand A1 zu dem Axialanschlag 14 angeordnet, wobei der Abstand A1 sich auf die geometrische Mitte der Ausnehmung 20 bzw. den Flächenmittelpunkt der Ausnehmung 20 und der von dem freien Ende 11 abgewandten Fläche der Ringnut 16 bzw. der dem freien Ende 11 zugewandten Seite des Außenflansches 15 bezieht.

Zwischen der Ausnehmung 20 und dem Außenflansch 15 ist in der Längsachse 5 beabstandet zu der Ausnehmung 20 ein Außenring 18 auf die äußere Mantelfläche des Rohranschlussstückes 10 angeformt oder angearbeitet, welcher radial von der äußeren Mantelfläche des Rohranschlussstückes 10 absteht. Der Abstand zwischen der Ausnehmung 20 und dem Außenring 18 beträgt bevorzugt mindestens die Nutbreite B1 der Ausnehmung 20.

Darüber hinaus ist zwischen dem ersten freien Ende 11 und der Ausnehmung 20 in die äußere Mantelfläche des Rohranschlussstückes 10 die mindestens eine Dichtungsnut 26 eingearbeitet oder eingeformt, in die ein Dichtring 60 eingesetzt werden kann. Im dargestellten Ausführungsbeispiel, wie insbesondere der Schnittdarstellung in Figur 9a zu entnehmen ist, sind in die äußere Mantelfläche des Rohranschlussstückes 10 zwei zueinander beabstandete Dichtungsnuten 26 eingearbeitet, in die jeweils ein Dichtring 60 eingelegt ist, der aus der Dichtungsnut 26 von der äußeren Mantelfläche des Rohranschlussstückes 10 absteht.

Auf der dem zweiten freien Ende 12 zugewandten Seite des Außenflansches 15 kann beispielsweise eine weiterer Verbindungsbereich 13 angeordnet sein, oder ein Anschlussgewinde, durch welches das Rohranschlussstück 10 mit einer weiteren Komponente eines Leitungssystems verbunden werden kann.

Das Rohr 50 kann aus einem metallischen Werkstoff, beispielsweise Kupfer, oder einem Kunststoff mit einer Wandstärke t mit einem kreisrunden Querschnitt hergestellt sein. Das Rohr 50 weist einen Innendurchmesser D3 und einen Außendurchmesser D4 auf, wobei der Innendurchmesser D3 des Rohrs 50 mit dem Außendurchmesser D1 der äußeren Mantelfläche des Rohranschlussstückes 10, wie Figur 8b zu entnehmen ist, korrespondiert. Bevorzugt sind der Innendurchmesser D3 des Rohrs 50 und der Außendurchmesser D1 der äußeren Mantelfläche des Rohranschlussstückes 10 als Spielpassung ausgebildet. Der Innendurchmesser D3 des Rohrs 50 ist folglich geringfügig größer als der Außendurchmesser D1 der äußeren Mantelfläche des Rohranschlussstückes 10, also D3 > D1.

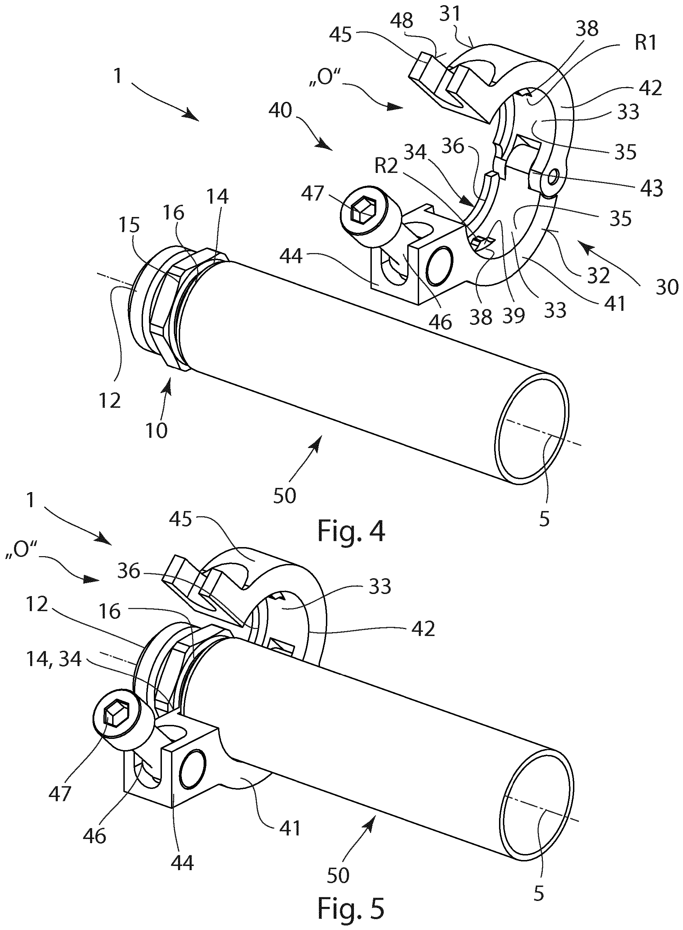

Weiterhin umfasst das System 1 zum Verbinden des Rohranschlussstückes 10 mit dem Rohr 50 ein Werkzeug 30, welches perspektivisch insbesondere in den Figuren 1 und 4 dargestellt ist.

Das Werkzeug 30 des Systems 1 dient der Herstellung der formschlüssigen Verbindung zwischen dem Rohranschlussstück 10 und dem Rohr 50, wodurch das Rohr 50 gegen ein Abrutschen von dem Rohranschlussstück 10 gesichert ist.

Das Werkzeug 30 umfasst in der Längsachse 5 einen Rohrabschnitt 33 mit einem ersten Ende 31 und einem zweiten Ende 32, wobei auf der inneren Mantelfläche 35 des Rohrabschnitts 33 an dem ersten Ende 31 ein Innenflansch 36 ausgebildet ist. Die innere Mantelfläche 35 des Rohrabschnittes 33 hat einen Innendurchmesser D2, wobei der Innendurchmesser D2 in etwa dem Außendurchmesser D4 des Rohrs 50 entspricht.

Der Innenflansch 36 bzw. das erste Ende 31 bildet einen Axialanschlag 34 für das Werkzeug 30, durch den die axiale Position des Werkzeugs 30 auf dem Rohranschlussstück 10 bei der Verwendung - wie nachfolgend im Detail noch erläutert wird - festlegt ist.

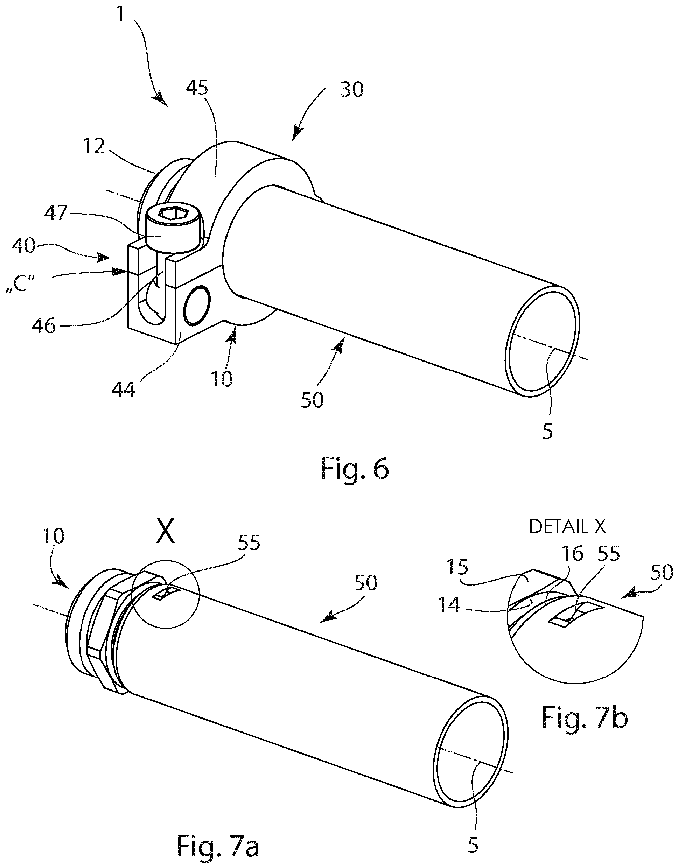

Weiterhin ist das Werkzeug 30 mehrteilig ausgebildet. Der Rohrabschnitt 33 des Werkzeugs 30 ist in der Längsachse 5 in zwei schalenförmige Segmente unterteilt, nämlich ein erstes Ringsegment 41 und ein zweiten Ringsegment 42, die über ein Gelenk 43 miteinander verbunden sind. Das erste Ringsegment 41 und das zweite Ringsegment 42 können mittels des Gelenks 43 aus einer geschlossenen Stellung "C", dargestellt in der Figur 6, in eine geöffnete Stellung "O", dargestellt in den Figuren 1 4, 5 verschwenkt werden. Das erste Ringsegment 41 und das zweite Ringsegment 42 können weiterhin in unterschiedlichen Winkelteilungen um die Längsachse 5 Teilringsegmente umfassen, die jeweils mittels eines Verbindungsgelenkes miteinander kettenartig verbunden sind.

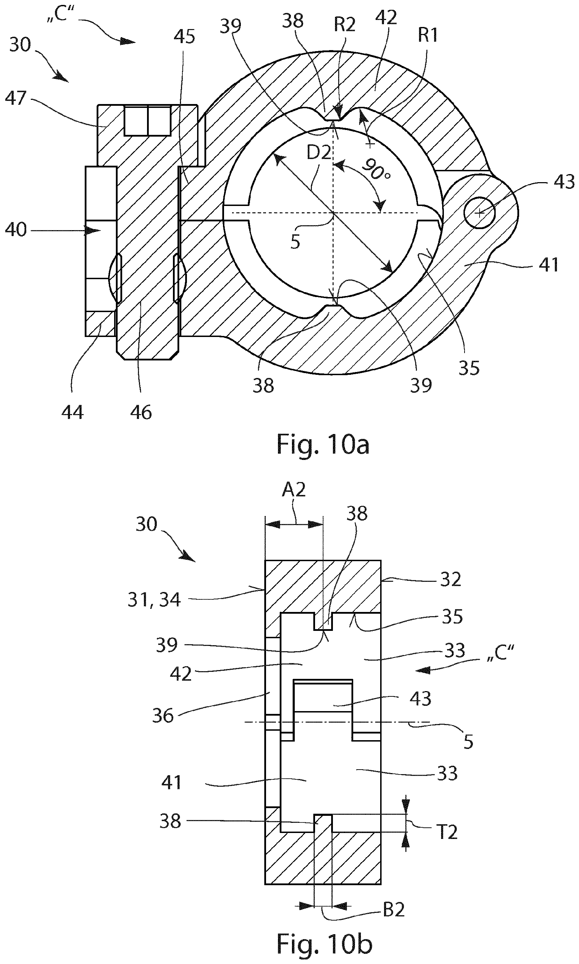

In der geschlossenen Stellung "C" bilden die beiden jeweils halbschalenförmigen Mantelflächen 35 - siehe Figur 10a- der beiden Ringsegmente 41, 42 die kreiszylindrische Mantelfläche 35 mit dem Innendurchmesser D2 um die Längsachse 5.

Das jeweilige von dem Gelenk 43 abgewandte freie Ende des ersten Ringsegments 41 und des zweiten Ringsegments 42 weisen jeweils eine Lasche 44, 45 auf, wobei die erste Lasche 44 an dem ersten Ringsegment 41 angeordnet ist und in einer zu der Längsachse parallel ausgerichteten Schwenkachse eine Gewindemutter aufweist. In die Gewindemutter greift ein als Schraubenbolzen 46 ausgebildetes Betätigungsmittel 40 ein. Die zweite Lasche 45 ist an dem zweiten Ringsegment 42 angeordnet.

Wie aus den Figuren 1 und 4 ersichtlich ist, ist die zweite Lasche 45 gabelförmig ausgebildet und eingerichtet, den Schraubenbolzen 46 bereichsweise zu umgreifen. Die zweite Lasche 45 umfasst weiterhin eine Auflagefläche 48 für einen Schraubenkopf 47 des Schraubenbolzens 46, die auf der von der ersten Lasche 44 abgewandten Seite der zweiten Lasche 45 angeordnet ist. Durch eine Drehbewegung des Schraubenbolzens 46 bzw. bei der Betätigung des Betätigungsmittels 40 kann das erste Ringsegment 41 und das zweite Ringsegment 42 aus der geöffneten Stellung "O" in die geschlossene Stellung "C" überführt werden und vice versa.

Der Schraubenbolzen 46 ist bevorzugt als standardisierte metrische Gewindeschraube ausgebildet. Der Schraubenkopf 47 ist in dem dargestellten Ausführungsbeispiel mit einem Innensechskant versehen, wodurch zur Betätigung des Werkzeugs 30 ein entsprechendes hand- oder maschinenbetriebenes Betätigungswerkzeug mit dem Schraubenbolzen 46 gekoppelt werden kann.

Die Figuren 10a und 10b zeigen, dass auf der inneren Mantelfläche 35 des Werkzeugs 30 an dem ersten Ringsegment 41 und an dem zweiten Ringsegment 42 jeweils ein Zahn 38 angeordnet ist, der radial von der inneren Mantelfläche 35 in Richtung der Längsachse 5 absteht. Der jeweilige Zahn ist bevorzugt symmetrisch ausgebildet und umfasst einen ersten Übergangsradius R1 und einen zweiten Übergangsradius R2, wobei der erste Übergangsradius R1 die innere Mantelfläche 35 mit einer Zahnflanke verbindet und der zweite Übergangsradius R2 die Zahnflanke mit der Zahnmantelfläche 39. Die Zahnmantelfläche 39 ist in einem Abstand T2 zu der innere Mantelfläche 35 angeordnet. Weiter bevorzugt ist der erste Übergangsradius R1 größer als der zweite Übergangsradius R2 ausgebildet, vorliegend in einem Verhältnis von ca. 2,5: 1.

Der Zahn 38 ist jeweils in einem vordefinierten Abstand A2 zu dem Axialanschlag 34 angeordnet, wobei der Abstand A2 dem Abstand A1 zwischen dem Axialanschlag 14 und der Ausnehmung 20 entspricht. Der jeweilige Abstand A1, A2 wird von der Mitte der Ausnehmung 20 in der Längsachse 5 sowie der Mitte des Zahns 38 in der Längsachse 5 gemessen. Die Breite B2 des Zahns 38 in der Längsachse 5 ist kleiner als die Breite B1 der Ausnehmung 20. Bevorzugt ist die Breite B1 der Ausnehmung 20 um die zweifache Wandstärke t des Rohrs 50 größer als die Breite B2 des Zahns 38. Der Abstand T2 kann der Nuttiefe T1 der Ausnehmung 30 entsprechen oder ist bevorzugt etwa um die Wandstärke t des Rohrs 50 kleiner als die Nuttiefe T1, also T1 = T2 - t.

Im vorliegenden Ausführungsbeispiel weist das Werkzeug 30 zwei Zähne 38 auf, die diametral zueinander angeordnet sind. Um eine bestmögliche Wirkung der Zähne 38 bei der Betätigung des Werkzeugs 30 zu erzielen, sollten die Zähne 38 jeweils um mindestens 30° zu dem Gelenk 43 bzw. zu der jeweiligen Lasche 44, 45 um die Längsachse 5 versetzt angeordnet sein. Im dargestellten Ausführungsbeispiel gemäß Figur 10a sind die Zähne 38 mittig zwischen dem Gelenk 43 und der jeweiligen Lasche 44, 45 angeordnet, also um 90° um die Längsachse versetzt. Das Werkzeug 30 kann eine Vielzahl von Zähnen 38 aufweisen, die beliebig in dem Abstand A2 zu dem Axialanschlag 34 angeordnet sind. Die Zähne 38 an dem Werkzeug können ebenfalls unterschiedliche Formen aufweisen, wodurch in Abhängigkeit der Umfangsposition des jeweiligen Zahns 38 zu der Längsachse 5 eine bestmögliche Wirkung erzielt werden kann. Bei mehreren Ausnehmungen 20 die entlang der Längsachse 5 angeordnet sind, kann das Werkzeug 30 ebenfalls mehrere Zähne 38 dazu korrespondierend entlang der Längsachse 5 aufweisen.

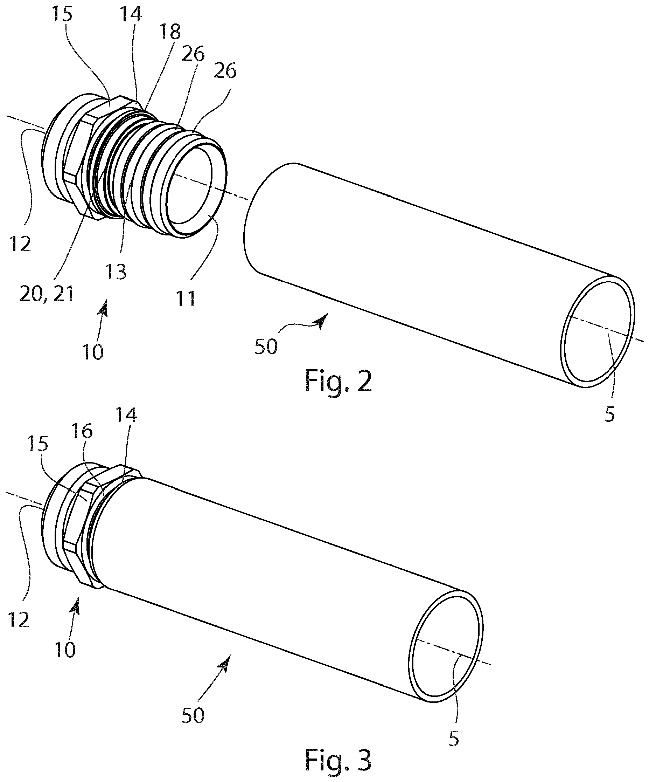

In den Figuren 2 bis 7a ist die schrittweise Verwendung des erfindungsgemäßen Systems 1 zur Herstellung einer Verbindung zwischen Rohranschlussstück 10 und dem Rohr 50 dargestellt.

In Figur 2 werden zunächst das Rohranschlussstück 10 und das Rohr 50 bereitgestellt, koaxial in der Längsachse 5 in Fluchtung gebracht, so dass das Rohr 50 von dem ersten freien Ende 11 des Rohranschlussstückes 10 über den Verbindungsbereich 13 über die beiden Dichtungsnuten 26 und die Ausnehmung 20 soweit geschoben werden kann, bis das Rohr 50 an dem Außenring 18 anschlägt. Das Rohr 50 überdeckt, wie Figur 3 zeigt, die beiden Dichtungsnuten 26 und die Ausnehmung 20, wobei der Spalt zwischen dem Rohr 50 und dem Verbindungsbereich 13 durch den jeweils in die Dichtungsnut eingesetzten Dichtring 60 abgedichtet ist.

In einem darauffolgenden Schritt wird das Werkzeug 30 entsprechend der Darstellung in Figur 4 bereitgestellt und in der geöffneten Stellung auf das Rohranschlussstück 10 und das Rohr 50 gesetzt. Das Werkzeug 30 umgreift dabei den Verbindungsbereich 13 des Rohranschlussstückes 10 und das Rohr 50 bereichsweise.

Insbesondere Figur 5 ist zu entnehmen, dass das Werkzeug 30 derart aufgesetzt wird, dass der Innenflansch 36 des Werkzeugs 30 formschlüssig in die Ringnut 16 des Rohranschlussstückes 10 eingreift, wodurch die axiale Position des Werkzeugs 30 der Längsachse 5 beidseitig relativ zu dem Rohranschlussstück 10 festgelegt ist. Hierzu korrespondiert die Form der Ringnut 16 mit der Form des Innenflansches 36 des Werkzeugs. In dieser Position liegen der Axialanschlag 34 des Werkzeugs 30 und der Axialanschlag 14 des Rohranschlussstückes 10 aneinander an. Dadurch, dass der Abstand A1 und der Abstand A2 im Wesentlichen gleich groß sind, liegen in dieser Position die Zähne 38 und die Ausnehmung 20 in einer gemeinsamen Ebene senkrecht zu der Längsachse 5.

Zum Betätigen des Betätigungsmittels 40 wird der Schraubenbolzen 46 um die Schwenkachse in eine Eingriffsstellung bewegt, in der der Schraubenkopf 47 auf einer Auflagefläche 48 der zweiten Lasche 45 anliegt. Durch eine entsprechende Drehung des Schraubenbolzens 46 durch ein geeignetes Betätigungswerkzeug greifen die beiden Gewinde des Schraubenbolzens 46 und der Mutter ineinander und das Werkzeug 30 wird in die geschlossene Stellung, dargestellt in Figur 6, überführt. Das Betätigungswerkzeug kann beispielsweise ein Handwerkzeug oder ein Elektrowerkzeug, insbesondere ein elektrisch betriebener Schrauber sein.

Bei der Betätigung des Werkzeugs 30 durch das Betätigungsmittel 40 werden die Zähne 38 auf das Rohr 50 gepresst und deformieren das Rohr 50 plastisch, wodurch eine dauerhafte Verformung 55, welche in den Figuren 8a bis 9b dargestellt ist, erzeugt ist, die in die Ausnehmung 20 eingreift.

Die Verformung 55 des Rohrs 50 greift dabei bevorzugt der Art in die Ausnehmung 20 ein, dass die Position des Rohrs 50 in der Längsachse 5 auf dem Rohranschlussstück 10 festgelegt ist. Sobald die beiden Laschen 44, 45 flächig aufeinanderliegen, ist das Verpressen des Rohranschlussstückes 10 mit dem Rohr 50 abgeschlossen, und dass Rohr 50 ist formschlüssig, gas- und flüssigkeitsdicht auf dem Verbindungsbereich 13 des Rohranschlussstückes 10 angeordnet, wobei die Dichtringe 60 eine entsprechende Abdichtung bewerkstelligen.

Abschließend kann das Werkzeug 30 entfernt werden und zum Verbinden eines weiteren Rohranschlussstückes 10 oder eines anderen Rohranschlussstückes 10 verwendet werden.

### Bezugszeichenliste

- 1: System
- 5: Längsachse
- 10: Rohranschlussstück
- 11: erstes freies Ende von 10
- 12: zweites freies Ende von 10
- 13: Verbindungsbereich
- 14: Axialanschlag
- 15: Außenflansch
- 16: Ringnut
- 18: Außenring
- 20: Ausnehmung
- 21: Radialnut
- 25: äußere Mantelfläche
- 30: Werkzeug
- 31: erstes Ende
- 32: zweites Ende
- 34: Axialanschlag
- 35: innere Mantelfläche von 30
- 36: Innenflansch
- 38: Zahn
- 39: Zahnmantelfläche
- 40: Betätigungsmittel
- 41: erstes Ringsegment
- 42: zweites Ringsegment
- 43: Gelenk
- 44: erste Lasche
- 45: zweite Lasche
- 46: Schraubenbolzen
- 47: Schraubenkopf
- 50: Rohr
- 55: Verformung
- 60: Dichtring
- D1: Durchmesser von 13
- D2: Innendurchmesser von Rohr 50
- D3: Innendurchmesser von 35
- D4: Außendurchmesser von Rohr 50
- A1: Abstand
- A2: Abstand
- T1: Nuttiefe von 20, 21
- T2: Zahnhöhe von 38

## Patentansprüche

1. System (1) zum Verbinden eines Rohranschlussstückes (10) mit einem Rohr (50) zum Leiten eines unter Druck stehenden Mediums, insbesondere eines gasförmigen oder flüssigen Mediums, umfassend
- das Rohranschlussstück (10) aufweisend wenigstens einen Verbindungsbereich (13) und wenigstens ein freies Ende (11),
- das Rohr (50), und
- ein Werkzeug (30),
- wobei der Verbindungsbereich (13) in einer Längsachse (5) wenigstens einen Axialanschlag (14) und wenigstens eine Ausnehmung (20) umfasst,
- wobei das Rohr (50) von dem freien Ende (11) auf den wenigstens einen Verbindungsbereich (13) des Rohranschlussstückes (10) geschoben werden kann,
- wobei das Werkzeug (30) an dem wenigstens einen Axialanschlag (14) an dem Rohranschlussstück (10) anliegt und das Rohr (50) und den wenigstens einen Verbindungsbereich (13) wenigstens bereichsweise umgreift,
- wobei das Werkzeug (30) wenigstens einen Zahn (38) umfasst, der in der Längsachse (5) korrespondierend zu der Ausnehmung (20) angeordnet ist,
- wobei die Form des wenigstens einen Zahns (38) mit der Form der Ausnehmung (20) korrespondiert,
- wobei der wenigstens eine Zahn (38) bei einer Betätigung des Werkzeugs (30) wenigstens eine Verformung (55) in der Längsachse (5) in das Rohr (50) schert und in einer Umfangsrichtung in die Ausnehmung (20) biegt, die in die wenigstens eine Ausnehmung (20) greift.

2. System (1) nach Anspruch 1,
**dadurch gekennzeichnet, dass** das Rohranschlussstück (10) einen Außenring (18) aufweist, an den das Rohr (50) beim Aufschieben anschlägt.

3. System (1) nach Anspruch 1 oder 2,
**dadurch gekennzeichnet, dass** der wenigstens eine Axialanschlag (14) einen Außenflansch (15) umfasst.

4. System (1) nach einem der vorgenannten Ansprüche,
**dadurch gekennzeichnet, dass** die wenigstens eine Ausnehmung (20) eine Radialnut (21) umfasst.

5. System (1) nach einem der vorgenannten Ansprüche
**dadurch gekennzeichnet, dass** der wenigstens eine Axialanschlag (14) eine Ringnut (16) umfasst, dass das Werkzeug (30) einen Innenflansch (36) umfasst, und dass der Innenflansch (36) eingerichtet ist, in die Ringnut (16) einzugreifen und die axiale Position des Werkzeugs (30) in der Längsachse (5) an dem Rohranschlussstück (10) festzulegen.

6. System (1) nach einem der vorgenannten Ansprüche,
**dadurch gekennzeichnet, dass** zwischen dem freien Ende (11) des Rohranschlussstückes (10) und der Ausnehmung (20) wenigstens eine Dichtung (60) angeordnet ist.

7. System (1) nach einem der vorgenannten Ansprüche,
**dadurch gekennzeichnet, dass** das Werkzeug (30) aus einem ersten Ringsegment (41) und einem zweiten Ringsegment (42) gebildet ist, und dass das erste Ringsegment (41) und das zweite Ringsegment (42) durch ein Gelenk (43) verschwenkbar verbunden sind.

8. System (1) nach Anspruch 7,
**dadurch gekennzeichnet, dass** der wenigstens eine Zahn (38) mindestens um 30° um die Längsachse (5) zu dem Gelenk (43) versetzt angeordnet ist.

9. System (1) nach einem der vorgenannten Ansprüche,
**dadurch gekennzeichnet, dass** der Abstand zwischen dem wenigstens einen Axialanschlag (14) und der wenigstens eine Ausnehmung (20) und zwischen dem korrespondierenden Axialanschlag (34) des Werkzeugs (30) und des wenigstens einen Zahns (38) identisch ist.

10. System (1) nach einem der vorgenannten Ansprüche,
**dadurch gekennzeichnet, dass** das Werkzeug (30) wenigstens zwei Zähne (38) umfasst, die bevorzugt umfangssymmetrisch angeordnet sind.

11. System (1) nach einem der vorgenannten Ansprüche
**dadurch gekennzeichnet, dass** zur Betätigung des Werkzeugs (30) wenigstens ein Betätigungsmittel (40) vorgesehen ist.

12. System (1) nach einem der vorgenannten Ansprüche
**dadurch gekennzeichnet, dass** das Betätigungsmittel (40) ein Schraubenbolzen (46) ist.

13. System (1) nach Anspruch 12,
**dadurch gekennzeichnet, dass** der Schraubenbolzen (46) schwenkbar an dem Werkzeug (30) gehalten ist.

14. System (1) nach einem der vorgenannten Ansprüche
**dadurch gekennzeichnet, dass** das Werkzeug (30) eine Wechselaufnahme umfasst, und dass in die Wechselaufnahme formschlüssig der wenigstens eine Zahn (38) einsetzbar ist.

15. System (1) nach einem der vorgenannten Ansprüche,
**dadurch gekennzeichnet, dass** die Wechselaufnahme ein Befestigungsmittel umfasst, durch welches der wenigstens eine wechselbare Zahn (38) in der Wechselaufnahme gehalten ist.

16. System (1) nach einem der vorgenannten Ansprüche,
**dadurch gekennzeichnet, dass** der wenigstens eine Zahn (38) spiegelsymmetrisch aus einem ersten Übergangsradius (R1), der eine Zahnflanke (F) mit der inneren Mantelfläche (35) verbindet und einem zweiten Übergangsradius (R2), der die Zahnflanke (F) mit einer Zahnmantelfläche (39) verbindet, gebildet ist.

17. System (1) nach Anspruch 15,
**dadurch gekennzeichnet, dass** der erste Übergangsradius (R1) größer ist als der zweite Übergangsradius (R2), insbesondere dass der erste Übergangsradius (R1) mindestens doppelt so groß wie der zweite Übergangsradius (R2).

## Claims

1. System (1) for connecting a pipe connection piece (10) to a pipe (50) for conducting a pressurized medium, in particular a gaseous or liquid medium, comprising
- the pipe connection piece (10) having at least one connection area (13) and at least one free end (11),
- the pipe (50), and
- a tool (30),
- wherein the connecting area (13) comprises, in a longitudinal axis (5), at least one axial stop (14) and at least one recess (20),
- wherein the pipe (50) can be pushed from the free end (11) onto the at least one connecting area (13) of the pipe connection piece (10),
- wherein the tool (30) bears against the at least one axial stop (14) on the pipe connecting piece (10) and engages around the pipe (50) and the at least one connecting area (13) at least in some areas,
- wherein the tool (30) comprises at least one tooth (38) arranged in the longitudinal axis (5) corresponding to the recess (20),
- wherein the shape of the at least one tooth (38) corresponds to the shape of the recess (20),
- wherein the at least one tooth (38), upon an actuation of the tool (30), shears at least one deformation (55) in the longitudinal axis (5) into the pipe (50) and bends in a circumferential direction into the recess (20) that engages into the at least one recess (20).

2. System (1) according to claim 1, **characterized in that** the pipe connection piece (10) has an outer ring (18) against which the pipe (50) abuts when it is pushed on.

3. System (1) according to claim 1 or 2, **characterized in that** the at least one axial stop (14) comprises an outer flange (15).

4. System (1) according to one of the preceding claims, **characterized in that** the at least one recess (20) comprises a radial groove (21).

5. System (1) according to one of the preceding claims **characterized in that** the at least one axial stop (14) comprises an annular groove (16), that the tool (30) comprises an inner flange (36), and that the inner flange (36) is adapted to engage in the annular groove (16) and fix the axial position of the tool (30) in the longitudinal axis (5) on the pipe connection piece (10).

6. System (1) according to one of the preceding claims, **characterized in that** at least one seal (60) is arranged between the free end (11) of the pipe connection piece (10) and the recess (20).

7. System (1) according to one of the preceding claims, **characterized in that** the tool (30) is formed out of a first ring segment (41) and a second ring segment (42), and that the first ring segment (41) and the second ring segment (42) are pivotably connected by a joint (43).

8. System (1) according to claim 7, **characterized in that** the at least one tooth (38) is arranged offset from the joint (43) by at least 30° about the longitudinal axis (5).

9. System (1) according to one of the preceding claims, **characterized in that** the distance between the at least one axial stop (14) and the at least one recess (20) and between the corresponding axial stop (34) of the tool (30) and the at least one tooth (38) is identical.

10. System (1) according to one of the preceding claims, **characterized in that** the tool (30) comprises at least two teeth (38), which are preferably arranged circumferentially symmetrically.

11. System (1) according to one of the preceding claims, **characterized in that** at least one actuating element (40) is provided for actuating the tool (30).

12. System (1) according to one of the preceding claims **characterized in that** the actuating element (40) is a stud bolt (46).

13. System (1) according to claim 12, **characterized in that** the stud bolt (46) is pivotably held on the tool (30).

14. System (1) according to one of the preceding claims, **characterized in that** the tool (30) comprises an exchange receptacle, and that the at least one tooth (38) can be inserted into the exchange receptacle in a form-fitting manner.

15. System (1) according to one of the preceding claims, **characterized in that** the exchange receptacle comprises a fixing element by means of which the at least one exchangeable tooth (38) is held in the exchange receptacle.

16. System (1) according to one of the preceding claims, **characterized in that** the at least one tooth (38) is formed mirror-symmetrically from a first transition radius (R1), which connects a tooth flank (F) to the inner lateral area (35), and a second transition radius (R2), which connects the tooth flank (F) to a tooth lateral area (39).

17. System (1) according to claim 15, **characterized in that** the first transition radius (R1) is larger than the second transition radius (R2), in particular that the first transition radius (R1) is at least twice as large as the second transition radius (R2).

## Revendications

1. Système (1) de liaison d'un raccord de tuyau (10) à un tuyau (50) pour conduire un milieu sous pression, en particulier un milieu gazeux ou liquide, comprenant
- le raccord de tuyau (10) présentant au moins une zone de liaison (13) et au moins une extrémité libre (11),
- le tuyau (50), et
- un outil (30),
- dans lequel la zone de liaison (13) comprend au moins une butée axiale (14) et au moins un évidement (20) dans un axe longitudinal (5),
- dans lequel le tuyau (50) peut être déplacé depuis l'extrémité libre (11) sur l'au moins une zone de liaison (13) du raccord de tuyau (10),
- dans lequel l'outil (30) repose contre l'au moins une butée axiale (14) sur le raccord de tuyau (10) et entoure le tuyau (50) et l'au moins une zone de liaison (13) au moins dans certaines zones,
- dans lequel l'outil (30) comprend au moins une dent (38) disposée dans l'axe longitudinal (5) correspondant à l'évidement (20),
- dans lequel la forme de l'au moins une dent (38) correspond à la forme de l'évidement (20),
- dans lequel l'au moins une dent (38), lorsque l'outil (30) est actionné, cisaille au moins une déformation (55) dans l'axe longitudinal (5) dans le tuyau (50) et se plie dans une direction circonférentielle dans l'évidement (20), laquelle déformation vient en prise dans l'au moins un évidement (20).

2. Système (1) selon la revendication 1,
**caractérisé en ce**
**que** le raccord de tuyau (10) présente un anneau extérieur (18) contre lequel le tuyau (50) vient en butée lorsqu'il est enfoncé.

3. Système (1) selon la revendication 1 ou 2,
**caractérisé en ce**
**que** l'au moins une butée axiale (14) comprend une bride extérieure (15).

4. Système (1) selon l'une des revendications précédentes,
**caractérisé en ce**
**que** l'au moins un évidement (20) comprend une rainure radiale (21).

5. Système (1) selon l'une des revendications précédentes,
**caractérisé en ce**
**que** l'au moins une butée axiale (14) comprend une rainure annulaire (16), que l'outil (30) comprend une bride intérieure (36), et que la bride intérieure (36) est conçue pour venir en prise dans la rainure annulaire (16) et pour fixer la position axiale de l'outil (30) dans l'axe longitudinal (5) sur le raccord de tuyau (10).

6. Système (1) selon l'une des revendications précédentes,
**caractérisé en ce**
**qu'**au moins un joint (60) est disposé entre l'extrémité libre (11) du raccord de tuyau (10) et l'évidement (20).

7. Système (1) selon l'une des revendications précédentes,
**caractérisé en ce**
**que** l'outil (30) est formé d'un premier segment d'anneau (41) et d'un second segment d'anneau (42) et que le premier segment d'anneau (41) et le second segment d'anneau (42) sont reliés pivotants par une articulation (43).

8. Système (1) selon la revendication 7,
**caractérisé en ce**
**que** l'au moins une dent (38) est disposée décalée d'au moins 30° autour de l'axe longitudinal (5) par rapport à l'articulation (43).

9. Système (1) selon l'une des revendications précédentes,
**caractérisé en ce**
**que** la distance entre l'au moins une butée axiale (14) et l'au moins un évidement (20) et la distance entre la butée axiale correspondante (34) de l'outil (30) et l'au moins une dent (38) sont identiques.

10. Système (1) selon l'une des revendications précédentes,
**caractérisé en ce**
**que** l'outil (30) comprend au moins deux dents (38) disposées de préférence de manière symétrique en circonférence.

11. Système (1) selon l'une des revendications précédentes,
**caractérisé en ce**
**qu'**au moins un moyen d'actionnement (40) est prévu pour actionner l'outil (30).

12. Système (1) selon l'une des revendications précédentes,
**caractérisé en ce**
**que** le moyen d'actionnement (40) est un boulon fileté (46).

13. Système (1) selon la revendication 12,
**caractérisé en ce**
**que** le boulon fileté (46) est maintenu pivotant sur l'outil (30).

14. Système (1) selon l'une des revendications précédentes,
**caractérisé en ce**
**que** l'outil (30) comprend un logement interchangeable, et que l'au moins une dent (38) peut être insérée dans le logement interchangeable par complémentarité de forme.

15. Système (1) selon l'une des revendications précédentes,
**caractérisé en ce**
**que** le logement interchangeable comprend un moyen de fixation par lequel l'au moins une dent (38) interchangeable est maintenue dans le logement interchangeable.

16. Système (1) selon l'une des revendications précédentes,
**caractérisé en ce**
**que** l'au moins une dent (38) est formée de manière symétrique axiale d'un premier rayon de transition (R1), lequel relie un rebord de dent (F) à la surface d'enveloppe intérieure (35), et d'un second rayon de transition (R2), lequel relie le rebord de dent (F) à une surface d'enveloppe de dent (39).

17. Système (1) selon la revendication 15,
**caractérisé en ce**
**que** le premier rayon de transition (R1) est plus grand que le second rayon de transition (R2), en particulier **en ce que** le premier rayon de transition (R1) est au moins deux fois plus grand que le second rayon de transition (R2).
